# EUROPÄISCHE PATENTSCHRIFT

(11) **EP 0 371 210 B1**
(45) Veröffentlichungstag und Bekanntmachung des Hinweises auf die Patenterteilung: **26.05.1993**
(21) Anmeldenummer: 89116108.5
(22) Anmeldetag: 31.08.1989
(51) Int. Cl.: G01G 21/22, B01L 9/06

(54) **Gefässhalter für Präzisionswaagen und Analysenwaagen**
Vessel support for precision and analysis balances
Support des vaisseaux par balances de précision et balances d'analyse

(30) Priorität: 29.11.1988 CH 4430/88
(43) Veröffentlichungstag der Anmeldung: 06.06.1990
(73) Patentinhaber: Mettler-Toledo AG, 8606 Greifensee (CH)
(72) Erfinder: Lüchinger, Paul, CH-8610 Uster (CH); Fringeli, Eduard, CH-8608 Bubikon (CH)

(56) Entgegenhaltungen:
- DE-U- 8 801 055
- FR-A- 355 289
- GB-A- 301 685
- GB-A- 320 172
- GB-A- 2 101 007
- US-A- 3 062 380

## Beschreibung

Gegenstand der vorliegenden Erfindung ist ein Gefässhalter für Präzisionswaagen und Analysenwaagen.

Bei Wägungen im Labor wird das Wägegut häufig nicht direkt auf die Waagschale aufgelegt, sondern zusammen mit einem Gefäss gewogen. Das Wägen von Gefässen wie Rundkolben, Reagenzgläsern, Spritzenzylindern usw. ist umständlich, da diese Gegenstände keine eigene Standfläche aufweisen und entweder umkippen, wobei der Inhalt verschüttet wird, oder dazu neigen, von der Waagschale wegzurollen.
Aus dem deutschen Gebrauchsmuster G 88 01 055.4 ist ein Waagschalenaufsatz als Ständer für Rundkolbengefässe bekannt. Der dort beschriebene Waagschalenaufsatz besteht aus einem kreisringförmigen Blech, das mindestens drei Erhöhungen aufweist, auf denen ein Rundkolben abgestützt gehalten werden kann. Dieser bekannte Waagschalenaufsatz eignet sich vorzüglich für Rundkolben; anders geformte Gefässe kann er jedoch nicht aufnehmen.

Aus der Patentanmeldung GB-A-2 101 007 ist ferner ein würfelartiger Halter für den Einsatz in Laborzentrifugen bekannt. Dieser Halter ist nur für die Aufnahme von Proberöhrchen unterschiedlichen Durchmessers vorgesehen und geeignet.

Die Aufgabe der vorliegenden Erfindung besteht nun darin, einen Gefässhalter zu schaffen, der geeignet ist, unterschiedlich geformte, im Labor verwendete Gefässe sicher zu halten.

Erfindungsgemäss wird diese Aufgabe dadurch gelöst, dass der Gefässhalter drei in einem Winkel zueinander angeordnete, ein Dreieck bildende Seitenteile umfasst, die an mindestens zwei Schmalseiten miteinander verbunden sind, und an denen Mittel zur Aufnahme von Gefässen angebracht sind.

Auf dem erfindungsgemässen Gefässhalter können, wenn dieser auf den Längskanten der Seitenteile stehend auf die Waagschale gelegt wird, Rundkolben verschiedener Durchmesser sicher und in variabler Stellung aufgelegt werden. Auf den oben liegenden Längskanten aufgesteckte Gleitschutzkörper verhindern ein Verdrehen der Rundkolben bei nicht senkrecht stehendem Hals. In den Seitenteilen angebrachte Bohrungen können zylindrische Behälter, z.B. Reagenzgläser oder Spritzenzylinder, in horizontaler oder geneigter Lage aufnehmen.
Wenn der Gefässhalter mit einem der Seitenteile auf der Waagschale aufliegend angeordnet ist, so können darin zylindrische Gefässe ebenfalls in horizontaler oder in geneigter Lage eingesetzt werden. Besteht der Gefässhalter aus einem federelastischen Blech, so können zwischen an einer Stelle nicht verbundenen Enden benachbarter Seitenteile Gefässe lose oder geklemmt gehalten werden.

Anhand eines illustrierten Ausführungsbeispieles wird die Erfindung näher erläutert. Es zeigen:
- Figur 1: eine Abwicklung eines Gefässhalters aus Blech,
- Figur 2: den Gefässhalter gemäss Figur 1 zu einem Dreieck geformt,
- Figur 3: eine Ansicht des Gefässhalters mit einem aufgesetzten Rundkolben und
- Figuren 4 bis 6: schematische Darstellungen des Gefässhalters mit darin in verschiedenen Stellungen gehaltenen Gefässen.

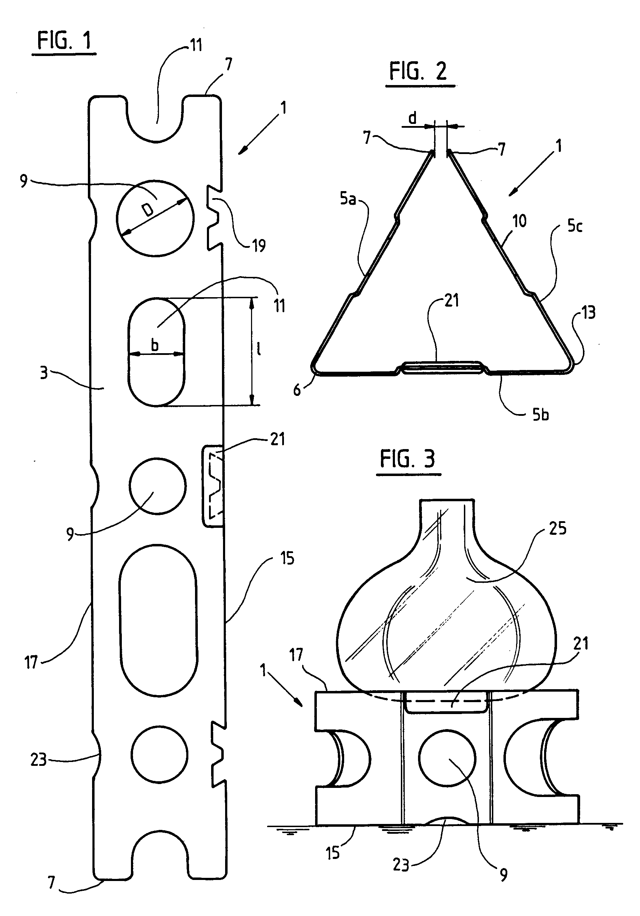

In Figur 1 ist der aus einem Blech, vorzugsweise Chromnickelstahl-Blechstreifen 3, hergestellte Gefässhalter 1 vor der Abbiegung dargestellt. Der Blechstreifen 3 wird gemäss Figur 2 zu einem Dreieck gebogen, das aus drei im wesentlichen rechteckigen Seitenteilen oder -abschnitten 5a, 5b, 5c besteht, die an mindestens zwei Schmalseiten 6 miteinander verbunden sind. Selbstverständlich könnten auch mehr als drei Flächenteile 5, 5b, 5c zu einem Mehreck gebogen werden, wobei vorzugsweise die Enden 7 des Blechstreifens 3 nicht miteinander verbunden und in einem Abstand d zueinander gehalten werden. In den Seitenteilen 5 ist im Zentrum je ein rundes Loch 9 angebracht. Die Löcher 9 können gleiche oder unterschiedliche Durchmesser D aufweisen. Im Blechstreifen 3 sind zwischen den vorzugsweise runden Löchern 9 zudem Langlöcher 11 angebracht, die wiederum, wie die Löcher 9, von unterschiedlicher Länge l und Breite b sind. Die Langlöcher 11 kommen beim Umbiegen des Blechstreifens 3 in den Bereich der Ecken 13 zu liegen.
Entlang den beiden Kanten 15 und 17 des Blechstreifens 3 sind jeweils im Bereich der Löcher 9 auf der oberen Kante 15 geeignete Einschnitte 19 zum Aufsetzen von Gleitschutzkörpern 21 vorgesehen. Auf der unteren Kante 17 sind an den entsprechenden Stellen Ausnehmungen oder Einbuchtungen 23 angebracht, die, wie später beschrieben wird, zur Auflage von zylinderförmigen Gefässen vorgesehen sind.
Im weiteren können die Seitenteile 5a, 5b, 5c jeweils im Bereich der Löcher 9 gegenüber den übrigen Bereichen zurückversetzte Abschnitte 10 aufweisen, damit nach dem Aufsetzen der Gleitschutzkörper 21, die vorzugsweise aus einem Kunststoff oder Gummi bestehen, der Gefässhalter 1 beim Aufstellen auf einen Flächenteil 5b mit im wesentlichen der gesamten Oberfläche fest auf der Unterlage aufliegen kann (vergl. Fig. 2).

Im folgenden wird der Gebrauch des erfindungsgemässen Gefässhalters 1 anhand der Figuren 3 bis 6 näher erläutert.

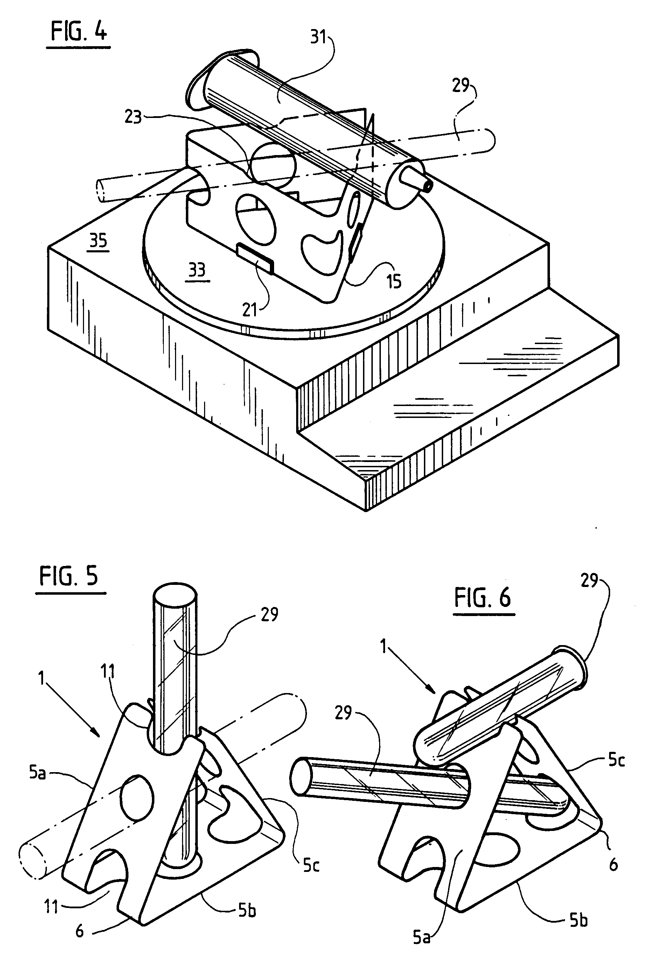

In der Figur 3 steht der Gefässhalter 1 auf der Kante 17 der Seitenteile 5a, 5b, 5c. Die Gleitschutzkörper 21 liegen in dieser Stellung oben und bilden die Auflage für einen Rundkolben 25. Dieser liegt an drei Punkten auf dem Gefässhalter 1 auf und wird in dieser Stellung gleitsicher gehalten.
Wird der Gefässhalter 1 umgedreht, so dass die Seitenteile 5 auf der Seitenkante 15 aufliegen, so kann in die Einbuchtungen 23 ein Reagenzglas 29, ein Spritzenzylinder 31 oder ein anderer Körper horizontal aufgelegt werden. Die aufgelegten Gefässe können selbstverständlich auch schräg geneigt zur Horizontalen aufgelegt werden, indem deren geschlossenes Ende nicht auf der oberen Kante 17, sondern auf der Waagschale 33 einer Waage 35 abgestützt wird (Figur 4).

In Figur 5 ist der Gefässhalter 1 auf den in der Mitte liegenden Flächenteil 5b gestellt; die beiden anderen Seitenteile 5a und 5c liegen in einem Winkel von etwa 60 Grad dazu und bilden ein aufrecht stehendes Dreieck. In dieser Lage können Reagenzgläser 29 vertikal, horizontal oder geneigt sicher auf der Waage 35 positioniert werden. Es ist dabei möglich, ungleich dicke Gefässe sicher zu halten, da die Durchmesser D der Löcher 9 ebenfalls unterschiedliche Durchmesser aufweisen und für verschiedene Typen von Gefässen geeignet sind. Wenn die beiden, nicht miteinander verbundenen Enden 7 des Blechstreifens 3 oben liegen, so können sie zum Auflegen eines Gefässes oder zum Einklemmen eines solchen verwendet werden. Es ist auf diese Weise möglich, auch einen drei- oder anderen mehreckigen Gegenstand vertikal zu halten, ohne dass Gefahr besteht, dass dieser beim Beschikken umfallen kann. In verschiedenen Einsteck- oder Haltearten können die Gefässe leicht mit Wägegut beschickt werden, ohne dass sie dabei aus Versehen beim Anstossen umfallen oder wegrollen.
Wie in den Figuren 2 und 3 kann an den Gefässhaltern 1 nach den Figuren 4 und 5 auch ein zurückversetzter Abschnitt 10 vorgesehen werden.
Selbstverständlich können anstelle der runden Löcher 9 eckige oder beliebig geformte Aussparungen treten. Es ist auch möglich, den Gefässhalter 1 aus Kunststoff herzustellen oder mit Kunststoff zu überziehen.

## Patentansprüche

1. Gefässhalter für Präzisionswaagen und Analysenwaagen, gekennzeichnet durch drei in einem Winkel zueinander angeordnete, ein Dreieck bildende Seitenteile (5a, 5b, 5c), die an mindestens zwei Schmalseiten (6) miteinander verbunden sind, und an denen Mittel zur Aufnahme von Gefässen angebracht sind.

2. Gefässhalter nach Anspruch 1, dadurch gekennzeichnet, dass in jedem Seitenteil (5a, 5b, 5c) als Mittel zur Aufnahme von Gefässen mindestens ein Loch (9) und an der unteren Längskante (17) eine Einbuchtung (23) angebracht ist.

3. Gefässhalter nach einem der Ansprüche 1 oder 2, dadurch gekennzeichnet, dass an der oberen Längskante (15) ein Gleitschutzkörper (21) befestigt ist.

4. Gefässhalter nach Anspruch 3, dadurch gekennzeichnet, dass die Seitenteile (5a, 5b, 5c) im Bereich der Gleitschutzkörper (21) einen zurückversetzten Abschnitt (10) aufweisen.

5. Gefässhalter nach einem der Ansprüche 1 bis 4, dadurch gekennzeichnet, dass in den Seitenteilen (5a, 5b, und/oder 5c) im Bereich der Kanten (6) je ein Langloch (11) angebracht ist.

6. Gefässhalter nach einem der Ansprüche 1 bis 5, dadurch gekennzeichnet, dass die beiden nichtverbundenen Enden (7) in einem Abstand zueinander liegen.

7. Gefässhalter nach einem der Ansprüche 2 bis 6, dadurch gekennzeichnet, dass die Löcher (9) in den Seitenteilen (5a, 5b, 5c) gleiche oder unterschiedliche Durchmesser (D) aufweisen.

8. Gefässhalter nach einem der Ansprüche 5 bis 7, dadurch gekennzeichnet, dass die Langlöcher (11) in den Seitenteilen (5a, 5b, 5c) gleiche oder unterschiedliche Längen (1) und/oder Breiten (b) aufweisen.

9. Gefässhalter nach einem der Ansprüche 1 bis 8, dadurch gekennzeichnet, dass die Seitenteile (5a, 5b, 5c) aus Stahl, Bunt- oder Leichtmetall oder Kunststoff bestehen.

## Claims

1. A receptacle holder for precision balances and analytical balances characterised by three side portions (5a, 5b, 5c) which are arranged at an angle relative to each other and which form a triangle and which are connected together at at least two narrow sides (6) and on which means are provided for receiving receptacles .

2. A receptacle holder according to claim 1 characterised in that at least one hole (9) is provided in each side portion (5a, 5b, 5c) and a recess (23) is provided at the lower longitudinal edge (17), as the means for receiving receptacles.

3. A receptacle holder according to one of claims 1 and 2 characterised in that an anti-slip member (21) is fixed to the upper longitudinal edge (15).

4. A receptacle holder according to claim 3 characterised in that the side portions (5a, 5b, 5c) have a set-back portion (10) in the region of the anti-slip members (21).

5. A receptacle holder according to one of claims 1 to 4 characterised in that a respective slot (11) is provided in the side portions (5a, 5b and/or 5c) in the region of the edges (6).

6. A receptacle holder according to one of claims 1 to 5 characterised in that the two ends (7) which are not connected together are disposed at a spacing from each other.

7. A receptacle holder according to one of claims 2 to 6 characterised in that the holes (9) in the side portions (5a, 5b, 5c) are of the same or different diameters (D).

8. A receptacle holder according to one of claims 5 to 7 characterised in that the slots (11) in the side portions (5a, 5b, 5c) are of the same or different lengths (l) and/or widths (b).

9. A receptacle holder according to one of claims 1 to 8 characterised in that the side portions (5a, 5b, 5c) comprise steel, non-ferrous or light metal or alloy or plastics material.

## Revendications

1. Porte-récipients pour balances de précision et balances d'analyses, caractérise par trois parties latérales (5a, 5b, 5c) formant un triangle, faisant un angle entre elles, reliées les unes aux autres le long d'au moins deux côtés étroits (6) et dans lesquelles des moyens sont réalisés pour recevoir des récipients.

2. Porte-récipients selon la revendication 1, caractérisé en ce que les moyens recevant des récipients réalisés dans chacune des parties latérales (5a, 5b, 5c) sont au moins un trou (9) et au moins un évidement (23) sur le bord longitudinal inférieur (17).

3. Porte-récipients selon l'une des revendications 1 ou 2, caractérisé en ce qu'une pièce anti-dérapante (21) est fixée sur le bord longitudinal supérieur (15).

4. Porte-récipients selon la revendication 3, caractérisé en ce que les parties latérales (5a, 5b, 5c) comportent une section (10) qui est en retrait au niveau des pièces anti-dérapantes (21).

5. Porte-récipients selon l'une des revendications 1 à 4, caractérisé en ce qu'une boutonnière (11) est réalisée dans la zone des angles (6) dans les parties latérales (5a, 5b et/ou 5c).

6. Porte-récipients selon l'une des revendications 1 à 5, caractérisé en ce que les deux extrémités non reliées (7) sont distantes l'une de l'autre.

7. Porte-récipients selon l'une des revendications 2 à 6, caractérisé en ce que les trous (9) des parties latérales (5a, 5b, 5c) ont des diamètres (D) identiques ou différents.

8. Porte-récipients selon l'une des revendications 5 à 7, caractérisé en ce que les boutonnières (11) des parties latérales (5a, 5b, 5c) ont des longueurs (l) et/ou des largeurs (b) identiques ou différentes.

9. Porte-récipients selon l'une des revendications 1 à 8, caractérisé en ce que les parties latérales (5a, 5b, 5c) sont en acier, en métal lourd non ferreux ou en métal léger ou encore en matière plastique.
